# EUROPEAN PATENT APPLICATION

(11) **EP 3 517 284 A1**
(43) Date of publication of application: **31.07.2019**
(21) Application number: 18305074.9
(22) Date of filing: 26.01.2018
(51) Int. Cl.: B29D 11/00, B24B 13/005

(54) **SYSTEM AND METHOD FOR AUTOMATED OPHTHALMIC LENS MANUFACTURING**

(71) Applicant: Essilor International, 94220 Charenton-le-Pont (FR)
(72) Inventor: DIAZ, Andres, DALLAS, TX Texas TX 75235 (US)
(74) Representative: Santarelli

(57) **Abstract**

Provided herein is a system for the automated manufacture of ophthalmic lenses, including the deblocking of ophthalmic lenses. The system includes a lens, a chamber assembly, a conveyor belt, and a plurality of diverter gates. The chamber assembly further comprises a first chamber which comprises a nozzle assembly and a second chamber. Also provided herein is a method for the automated manufacture of ophthalmic lenses. The method includes the deblocking of ophthalmic lenses.

## Description

### FIELD OF THE INVENTION

The present disclosure relates generally to the ophthalmic lens industry. More specifically, embodiments of the present disclosure relate to the automated manufacturing of ophthalmic lenses.

### BACKGROUND OF THE INVENTION

Ophthalmic lenses are created using a process of "lens surfacing." This process is used to produce a lens with a specific curvature that yields specifically desired optical properties. To prepare a lens for surfacing, an unfinished lens undergoes a process of "blocking." In the blocking process, an unfinished lens, which is selected due to its specific size and curvature, is coupled to a block using an adhesive. In certain embodiments a finished lens may be used in the blocking process.

The blocking process begins by applying the adhesive to a convex side of the lens. A blocking alloy is attached to the lens via the adhesive. The block is then attached to the alloy, for example, by heating the alloy, coupling the alloy to the block, and allowing the alloy to cool. The blocking process must be precise, because if the block is not coupled to the exact center of the lens, the finishing process will not occur in the proper location on the lens. After the block is coupled to the unfinished lens, creating a "blocked lens," the block is secured to the lens during the finishing process without risking damage to the lens itself. Once the blocking process is finished, the lens undergoes a finishing process. Once the finishing process is completed, the block must be removed from the lens.

The process of removing the block from the lens (the "deblocking process") includes removing the block from the finished lens by melting the alloy composition, removing the adhesive that coupled the block to the lens, reclaiming the alloy from the block, and sorting the removed blocks. Current methods of deblocking require each individual step of the process to occur at different stations along an assembly line. These methods are slow and require a substantial amount of time and manpower. As a result, each step is long, prone to human error, and increased costs. Thus, an automated, time-efficient process is needed.

Further, some steps in this process present risks to an operator's safety. Current methods of removing the block from the finished lens involve an operator using a hammer to manually remove the block from the lens, and place the lens back in its container. This presents several risks, including, but not limited to, a risk of injury to the operator because of the repetitive use of the operator's hand and repetitive wrist motion, and a risk of damage to the finished lens. Thus, an automated method of removing the block from the finished lens is needed which reduces the risk of damage to the lens and the risk of injury to the operator.

Current methods of removing the adhesive from the block require an operator to manually move the lens from its receptacle to a location where the adhesive is removed, remove the adhesive, and move the lens, without adhesive, from the location back to its receptacle. The operator must manually carry each receptacle, or a set of receptacles, to and from the adhesive removal station. This process is time-consuming and inefficient. Thus, an automated method of removing the adhesive from the block is needed.

Current methods of reclaiming the alloy from the block require an operator to manually mix the melted alloy with hot water in a bin to initiate the melting process. This process is inefficient and results in substantial amounts of wasted alloy. Further, the current process is dangerous, because an operator is at risk of being splashed with a hot mixture of water and alloy, which may include dangerous elements such as lead and cadmium. Thus, an automated method of reclaiming the alloy is needed.

Current methods of sorting decoupled blocks require an operator to examine each block individually and subsequently place the block in a container corresponding to its size. This process is heavily manual, prone to human error, time-consuming, and expensive. Thus, an automated method of sorting decoupled blocks is needed.

Presented herein is a system for the automated manufacture of ophthalmic lenses, which requires minimal operating steps and minimal operator skill level. Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

### SUMMARY

Provided herein is a system for the automated manufacture of an ophthalmic lens, the system comprising: a first arm having a first end and a second end and positioned along a first vertical axis, wherein the first arm is pivotable from the first vertical axis to a first horizontal axis, and wherein the second end of the first arm is configured to receive a lens coupled to a block using an alloy composition and an adhesive composition; a second arm having a first end and a second end, wherein the second arm is configured to extend along the first horizontal axis opposite the first arm, and wherein the second end of the second arm is configured to be operably coupled to the block; and a chamber assembly comprising: a first chamber configured for receiving at least a portion of the first arm and at least a portion of the second arm, and wherein the first chamber comprises a nozzle assembly configured to deposit at least one agent onto at least a portion of the lens; and a second chamber adjacent the first chamber, wherein the second chamber comprises a third arm extending along a second horizontal axis, and wherein the second chamber is configured to receive the lens coupled to a block from the first arm.

A method for the automated manufacture of ophthalmic lenses is presented, which method comprises: providing a chamber assembly comprising a first chamber and a second chamber; and at least one lens coupled to at least one block, wherein the at least one block is coupled to the at least one lens via an alloy composition and an adhesive composition; melting the alloy composition to remove the at least one block from the at least one lens within the chamber assembly; removing the adhesive composition from the at least one lens within the chamber assembly; reclaiming the alloy composition from the removed at least one block within the chamber assembly; removing the at least one block; and sorting the at least one removed block. The method further comprises releasing the block from the lens as the alloy composition is melted; draining the alloy composition from the second chamber while retaining water within the second chamber; and sorting the removed block using a plurality of diverter gates

Other objects, features, and advantages of the present disclosure may become apparent from the following detailed description. It should be understood, however, that the detailed description and the specific examples, while indicating specific embodiments of the invention, are given by way of illustration only and should not be construed as limiting, since various changes and modifications within the spirit and scope of the invention will become apparent to those skilled in the art from this detailed description.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIGURE 1A illustrates a front view of a system for the automated manufacture of ophthalmic lenses according to various embodiments of the present disclosure;
FIGURE 1B illustrates a front view of the system of Figure 1A according to various embodiments of the present disclosure;
FIGURE 1C illustrates a back view of the system of Figures 1A and 1B according to various embodiments of the present disclosure;
FIGURE 2 illustrates a back view of a chamber assembly of the system of FIGURES 1A-1C, according to various embodiments of the present disclosure;
FIGURE 3 illustrates a partial view of the nozzle assembly of the system of FIGURES 1A-2, located in the interior of a first chamber of the system according to various embodiments of the present disclosure;
FIGURE 4 illustrates a sorting assembly of the system of Figures 1A-3 according to various embodiments of the present disclosure;
FIGURE 5 illustrates a portion of the interior of a second chamber of the system of Figures 1A-4, according to various embodiments of the present disclosure;
FIGURE 6 illustrates a lens "L" during the blocking process using the system described herein, according to various embodiments of the present disclosure; and
FIGURE 7 illustrates a method for deblocking a lens using the system described herein, according to various embodiments of the present disclosure.

### DETAILED DESCRIPTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or "in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

It must be noted that, as used in the specification and the appended claims, the singular forms "a," "an," and "the" include plural referents unless the context clearly dictates otherwise. That is, unless clearly specified otherwise, as used herein the words "a" and "an" and the like carry the meaning of "one or more." Additionally, it is to be understood that terms such as "left," "right," "top," "bottom," "front," "rear," "side," "height," "length," "width," "upper," "lower," "interior," "exterior," "inner," "outer," and the like that may be used herein, merely describe points of reference and do not necessarily limit embodiments of the disclosed subject matter to any particular orientation or configuration. Furthermore, terms such as "first," "second," "third," etc., merely identify one of a number of portions, components, points of reference, operations and/or functions as described herein, and likewise do not necessarily limit embodiments of the disclosed subject matter to any particular configuration or orientation.

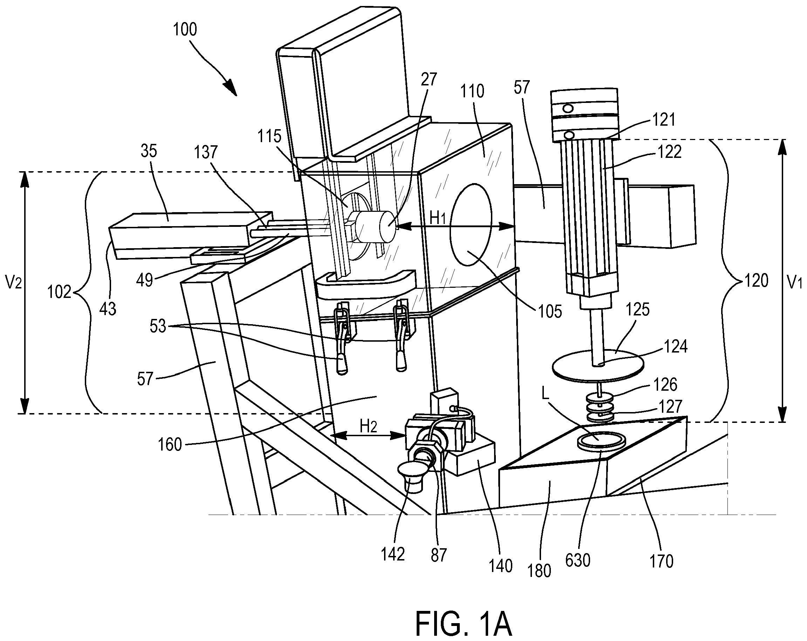

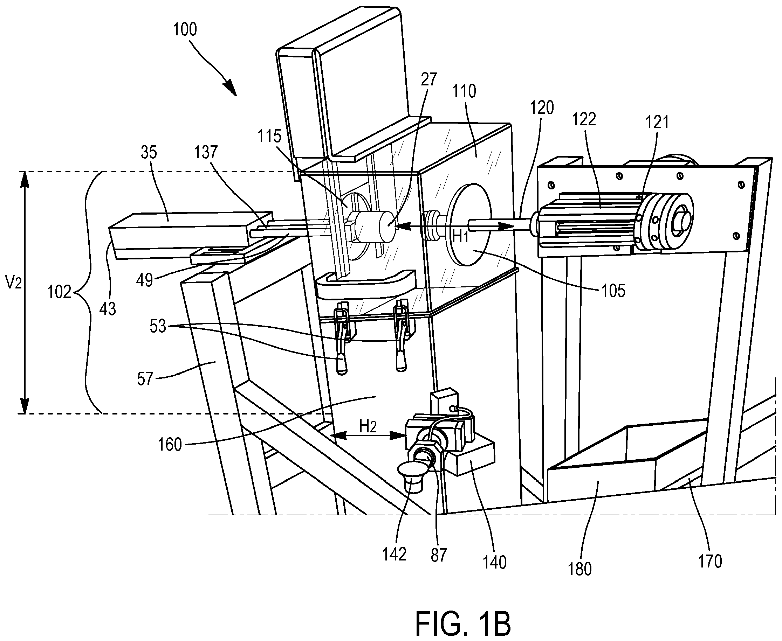

Reference is now made to the drawings, wherein like reference numerals designate identical or corresponding parts throughout the several views. Referring to Figures 1A and 1B, a system 100 for the automated manufacture of ophthalmic lenses according to various embodiments of the present disclosure is illustrated. As illustrated in Figures 1A and 1B, the system 100 comprises a support frame 57, to which at least part of the system 100 is attached. The support frame 57 may be comprised of stainless steel or any other suitable metal. The system 100 utilizes pneumatic and electrical systems and can be automated by a computer PLC program. The support frame 57 can comprise a pneumatic cylinder (not shown). The system 100 further comprises a first arm 120 having a first end 121 and a second end 127. The arm 120 is attached to the support frame 57. The first arm 120 is capable of extending along a vertical axis V1 and is pivotable to also extend along a horizontal axis H1 (as shown in Figure 1B). In another embodiment (not shown) the first arm 120 can be moved laterally from the support frame 57 from a first vertical axis V1 to another vertical axis (not shown) Vn (where n is any number from 3 to ∞) before being positioned along the horizontal axis H1. The arm 120 is configured to be rotatable along a 90 degree angle from a single point of attachment to support frame 57 from the first vertical axis V1 to the horizontal axis H1 (Figure 1B). When extended along the horizontal axis H1, the first arm 120 is configured to extend through at least a portion of opening 105 of chamber 110 toward a center of first chamber 110, as described in further detail herein.

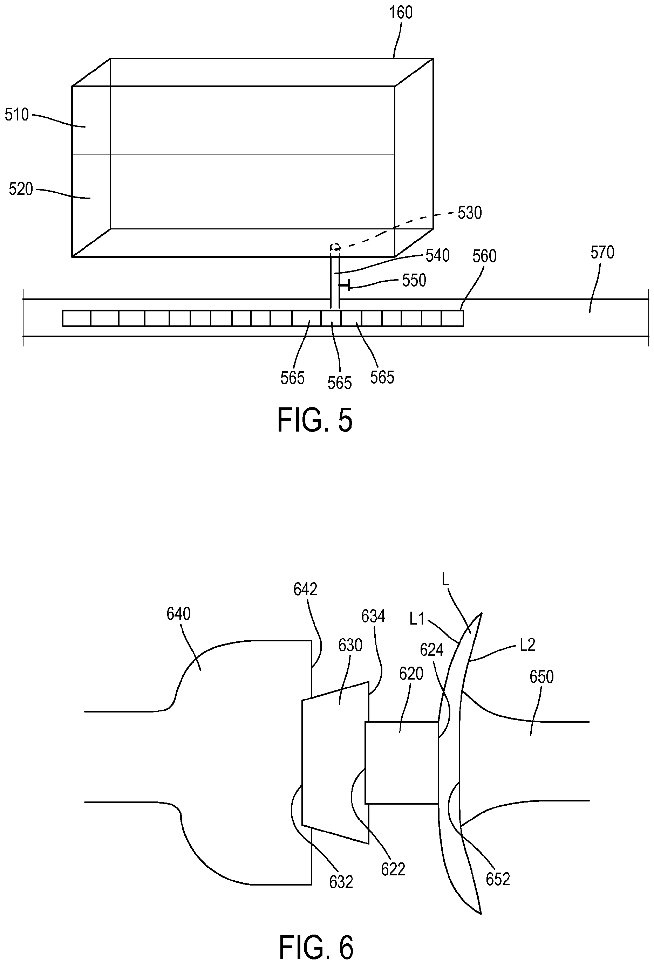

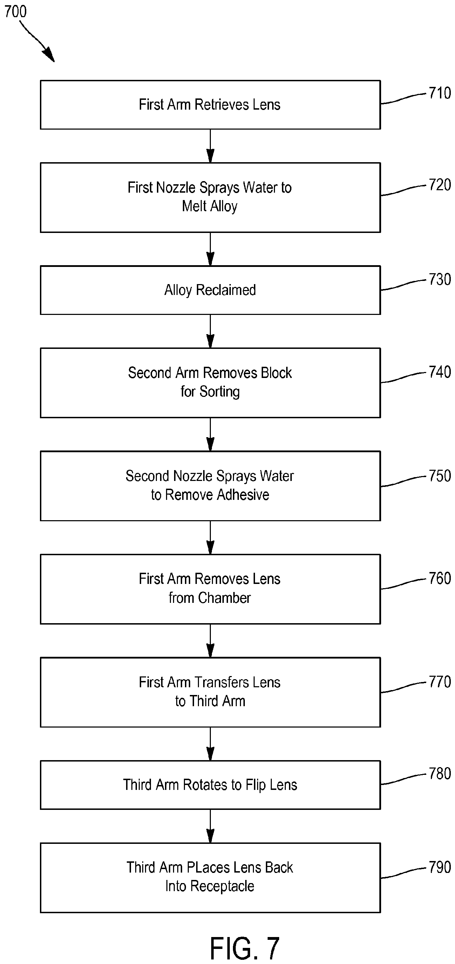

The first arm 120 further comprises, between the first end 121 and second end 127 of the first arm, a first portion 122, a second portion 124, a skirt 125 extending circumferentially around the second portion, and a third portion 126. Before the process described herein is started, in a resting position, the first arm 120 extends in a vertical position V1 such that a lens "L" (having opposing concave L2 and convex L1 surfaces (Figure 6) attached to block 630 (Figure 6) is positioned directly below the first arm 120 within a receptacle 180. The system can comprise at least one receptacle, and preferably a plurality of receptacles 180. Before the deblocking process starts, as described in Figure 7, the first arm 120, coupled to the lens L, is positioned outside of chamber assembly 102. Receptacle 180 comprises an interior surface capable of receiving lenses such as lens L. The lens receptacle 180 is surrounded by 4 walls, to define a receiving or receptacle tray. The system 100 further comprises a conveyor belt assembly, the conveyor belt assembly comprising a conveyor belt 170 moveably positioned on a support frame and at least one lens receptacle removably positioned on the conveyor belt. The conveyor belt 170 is passed around and stretched between a plurality of rollers for endless traveling and is used to direct the lenses L used in this process. The conveyor belt 170 is removably attached to a support frame 57. The receptacle 180 is removably positioned on the conveyor belt 170.

The system further comprises a chamber assembly 102. The chamber assembly 102 comprises a first chamber 110 (described above) defined by four opposing walls, a top wall, and a bottom wall. The chamber 110 comprises a first opening 105 (described above) defined on a first wall of the first chamber 110. The first opening 105 is positioned proximate at least a portion of the first arm 120. The chamber 110 comprises a second opening 115 defined on a second wall of the first chamber 110, opposite the first opening 105. Each of the openings 105, 115 can be approximately 4-5 inches in diameter, preferably about 4 inches in diameter. In certain embodiments, the first and second openings 105, 115 are circular. The first opening 105 and second opening 115 are positioned along horizontal axis H1. The first opening 105 is configured to allow the lens L and a portion of first arm 120 to be positioned by a pre-programmed, automated movement of the first arm 120 through opening 105 into a portion of the first chamber 110.

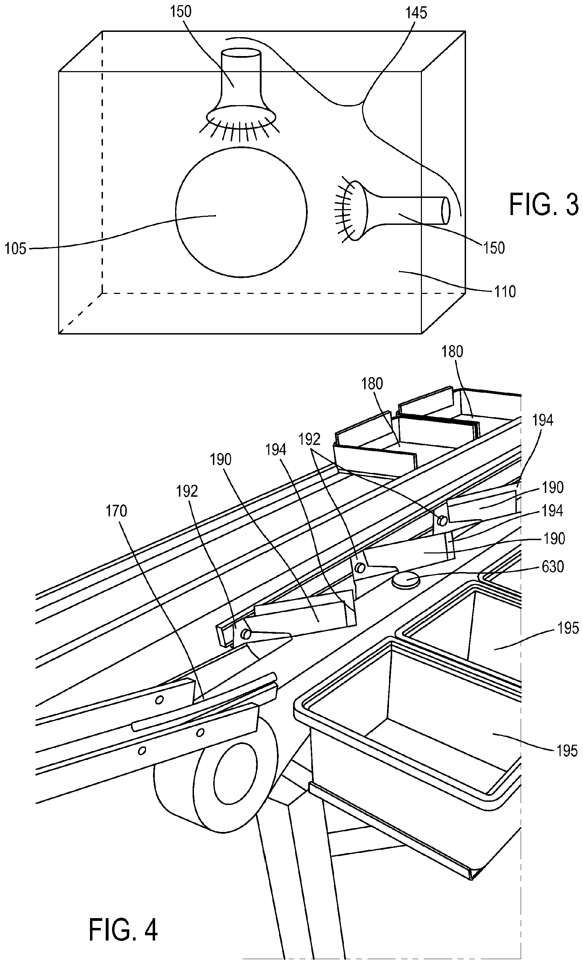

In certain embodiments, the first chamber 110 is a rectangular apparatus configured to facilitate the deblocking process, although other configurations may be contemplated. The walls of the first chamber 110 may be comprised of a material sufficient to withstand fluctuating pressures and temperatures. For example, the walls of the first chamber 110 may be comprised of a polycarbonate or thermoplastic material or stainless steel or other similar metals. The chamber assembly 102 can be one system comprised of two compartments or tanks, or two separate compartments or chambers positioned adjacent to each other. In one embodiment, either the first chamber 110 or the second chamber 160 can comprise a water tank or water compartment (not shown) within the chamber 110 or 160. Alternatively, the water tank can be a separate compartment that is positioned near the first chamber 110 and second chamber 160. A conduit such as a pipe (not shown) fluidly connects the first chamber 110 and the second chamber 160 to enable fluid flow between the two chambers. Specifically, the conduit is configured to allow water and alloy to pass through the conduit from the first chamber 110 to the second chamber 160. A drain (Figure 5) is fluidly connected to the chamber assembly 102 and can be used to remove alloy from the system 100. A pump (not shown) can be used to add or remove water to the chamber assembly 102. The alloy reclamation process, described herein, from a deblocked lens L, occurs inside of the second chamber 160. Although not shown in the chamber 110 in Figures 1A and 1B, the first chamber 110 further comprises a nozzle assembly 145 (Figure 3) comprising at least one nozzle 150. The nozzle assembly 145 is configured for spraying at least one agent onto a surface of lens L. The agent can be, but is not limited to, water. The nozzle assembly comprises at least one nozzle configured to deposit the agent by spraying the agent onto at least a portion of the lens at a first temperature and first pressure sufficient to melt the alloy composition, and wherein the agent is water. The nozzle assembly comprises a second nozzle configured to deposit the agent by spraying the agent onto at least a portion of the lens at a second temperature and a second pressure sufficient to remove the adhesive from at least a portion of the lens. The second pressure can be equal to, less than, or greater than the first pressure.

In one embodiment, as illustrated in Figure 1A, the first chamber 110 and the second chamber 160 can be secured together using at least one clamping mechanism 53. As illustrated, the first chamber 110 and second chamber 160 are secured together in a hermetic or airtight configuration using two clamping mechanisms 53. Although Figures 1A and 1B depict two clamping mechanisms 53, more or fewer than two clamping mechanisms 53 may be utilized. In certain embodiments, the first chamber 110 and the second chamber 160 are divided by a wall. In other embodiments the first chamber 110 and second chamber 160 are not secured together, but rather, are positioned next to each other or on top of each other.

In certain embodiments, the first chamber 110 and the second chamber 160 are configured so that the first chamber 110 is situated directly on top of and adjacent to the second chamber 160 such that the chambers are fluidly connected and an outer surface of chamber 110 is in contact with an outer surface of second chamber 160. This configuration allows melted alloy to flow directly from the first chamber 110 into the second chamber 160 as the alloy is removed from a blocked lens, and allows water to flow directly into the second chamber 160 from the first chamber 110 after it is used in the deblocking process. Both the alloy used in the alloy reclamation process, as well as the use of water in the process, is discussed in greater detail below.

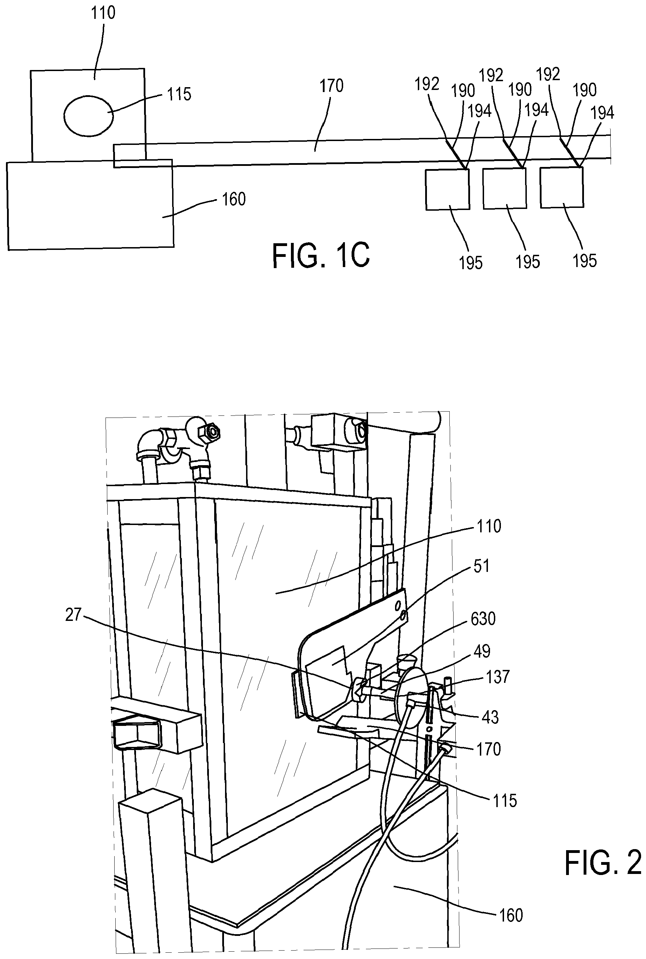

The system further comprises a second arm 137 having a first end 43 and a second end 27. The second arm is pivotable from a second vertical axis to the first horizontal axis. The second arm 137 is configured to extend through at least a portion of opening 115 toward a center of first chamber 110 along the horizontal axis H1. The second arm 137 further comprises a first solid block-like portion 35 and a second portion 49 comprising at least one leg. In one embodiment, the second portion comprises at least one leg, and more particularly, three legs. In certain embodiments, the second arm 137 includes a skirt 51 (Figure 2) which fits around second opening 115 of around an outer surface of the first chamber 110 to create a hermetic seal. In these embodiments, this hermetic seal functions to contain any residual adhesive, water, or alloy within the first chamber 110. Similar to the first arm 120, in another embodiment the second arm 137 can be moved laterally from the support frame 57 from a first vertical axis V2, for example, to a second vertical axis Vn (where n is any number from 3 to ∞), before being positioned along the horizontal axis H1.

The second chamber 160 further comprises a third arm 140 that is disposed along a second horizontal axis H2. The third arm 140 comprises a first end (not shown) and a second end 87 wherein the second end comprises a suction cup capable of retaining at least a portion of the lens. In one aspect the second end 87 of the third arm 140 is attached to a suction cup 142 that is configured to receive the deblocked lens L from the first arm 120. Suction cup 142 has an outer face that is capable of being in contact with the lens L and is used to protect the lens L and enable it to rotate 180 degrees so that it will not be scratched when it is deposited into the lens receptacle 180. More particularly, the outer face of the suction cup 142 is configured to be attached to the convex side of the lens L that is positioned within a lens receptacle 180. The suction cup 142 is capable of retaining both block 630 (shown in Figure 6) and the lens L. In these embodiments, the suction cup 142 is made of a material, for example silicone, that will prevent damage to the deblocked lens L, while providing sufficient suction to hold the lens L in place throughout the deblocking process. The third arm is a pivotable rotating arm, configured to receive the lens from the first arm, rotate the lens one hundred and eighty degrees, and place the lens in the receptacle such that the concave side of the lens is in contact with the receptacle 180.

In certain embodiments, during a blocking process using the system 100, a lens L may be blocked and positioned within the lens receptacle 180 such that its concave side is facing away from the interior surface of the receptacle 180. In certain embodiments, the first arm 120 is configured to retrieve lens L from the lens receptacle 180 by means of suction cup 650 (Figure 6) that is positioned on the second end 127 of the first arm 120. After the face L2 (Figure 6) of lens L is secured to the outer face 652 of suction cup 650 (Figure 6) of arm 120, the arm 120 rotates about a fixed point until it is positioned along a first horizontal axis H1 such that the lens L is diametrically aligned with the first opening 105. In various embodiments, the rotation of the first arm 120 may be effectuated such that it is equal to or approximately ninety degrees relative to the vertical axis V1. Once the lens L is diametrically aligned with the first opening 105, the first arm 120 may insert the lens L into the first chamber 110 through the first opening 105. In certain embodiments, a skirt 125 is configured such that at least a portion of the skirt 125 is positioned around the first opening 105 on a portion of the outer surface of chamber 110 to create a hermetic seal. In these embodiments, the seal functions to contain any residual adhesive, water, or alloy within the first chamber 110.

The second arm 137 is configured to be at least partially positioned within the first chamber 110 through the second opening 115. In certain embodiments, the second end 27 of the second arm 137 contains a chuck 640 (shown in Figure 6) having an outer face 642. The chuck 640 is configured to be operably coupled to the first face 632 of block 630, thereby maintaining the lens L in place throughout the deblocking process. The chuck 640 and block 630 are discussed in greater detail below. In certain embodiments, the second arm 137 is configured to rotate about a fixed point from a second vertical axis V2 to horizontal axis H1 until the second arm 137 is substantially aligned with the second opening 115. In various embodiments, the rotation of the second arm 137 may be equal to or approximately ninety degrees relative to vertical axis V1. In other embodiments, the second arm 137 is configured so that at least a portion of the arm 137 may be inserted into the second opening 115, but does not rotate about a fixed axis. For example, a second end 27 of the second arm 137 may be inserted into the second opening 115. Once the second arm 137 is aligned with the second opening 115, a portion of the second arm 137 is positioned into the first chamber 110 through the second opening 115. Once the second arm 137 has been positioned into at least a portion of the first chamber 110, at least a portion of the outer face 642 of the chuck 640 is attached via suction to the first face 632 of the block 630 (Figure 6).

Once the lens L has been inserted into the first chamber 110 and the chuck 640 has attached to the block 630, the deblocking process may begin, which is discussed in greater detail below. Once the deblocking process has been completed, both the first arm 120 and the second arm 137 are withdrawn from the first chamber 110. The first arm 120 rotates approximately ninety degrees back to its original position along the vertical axis V1, as illustrated in Figure 1A. In certain embodiments the second arm 137 is rotatable about a fixed axis V2, approximately ninety degrees back to its original position along a separate parallel vertical axis V2. The arms 120 and 137 may be simultaneously rotated back to their original positions or rotated back to their original positions at different times.

As illustrated in Figure 1C, the system further comprises a plurality of diverter gates are positioned parallel relative to each other to allow a first block to be diverted from the conveyor belt before a second block is diverted from the conveyor belt, wherein the first block is larger than the second block. The one or more diverter gates 190 are positioned proximate the conveyor belt 170 and one or more sorting bins 195 between the conveyor belt and the sorting bins. Each diverter gate 190 has a first end 192 and a second end 194. In one aspect, the system 100 may comprise a plurality of sorting bins 195, described in further detail below.

In certain embodiments, although not illustrated, the system 100 can be used to simultaneously de-block two lenses. In this embodiment the first chamber 110 has two first openings 105, two first arms 120, two third arms 140, two second openings 115, and two second arms 137. In these embodiments, the two first arms 120 are each configured to attach to a first lens L and a second lens 2L (not shown), respectively, from the lens receptacle 180 at the same time. The two first arms 120 insert the two lenses L, 2L into the first chamber 110 at the same time, where the first face 632 of block 630 of each lens is secured to the outer face 642 of chuck 640 by second arm 137. Once the two lenses L, 2L are in place, the lenses undergo the de-blocking process. Once the two lenses L, 2L have undergone the de-blocking process, the first arms 120 retract the deblocked lenses from the first chamber 110 and transfer the deblocked two lenses L, 2L to the third arms 140. The third arms 140 receive the deblocked lenses L, 2L, rotate the deblocked lenses L, 2L one-hundred-eighty degrees, and place the deblocked lenses L, 2L in the receptacle 180.

In certain embodiments, the first chamber 110 is configured to facilitate the blocking process. In these embodiments, the first arm 120 is configured to retrieve the lens L from the lens receptacle 180 and rotate about a fixed point from a first vertical axis V1 to a horizontal axis H1 until the convex surface of the lens L is diametrically aligned with the first opening 105. Once the lens L is diametrically aligned with the first opening 105, the first arm 120 positions the lens L into the first chamber 110 through the first opening 105. Once the lens L has been positioned within the first chamber 110, the at least one nozzle 150 (shown in Figure 3) sprays an agent, such as, but not limited to, an adhesive, onto a predetermined center of the convex side of the lens L.

The second arm 137 couples to an alloy 620 (shown in Figure 6), inserts into the first chamber 110, and attaches the outer face 624 of the alloy 620 to the adhesive on the lens L (the L1 face of the lens). In some embodiments, the alloy 620 is at a temperature of about 53° C when it couples to the adhesive, and it is in a liquid form. After the second arm 137 has attached the alloy 620 onto the adhesive, the second arm 137 withdraws from the first chamber 110 and couples to a block 630. The second arm 137 reinserts into the first chamber 110 in a position where the face 634 of block 630 is adjacent to and contacting the face 622 of alloy 620. An agent such as water is sprayed from the nozzle assembly 145 to the alloy at a temperature sufficient to melt the alloy. The first chamber 110 cools down naturally as part of the process described herein until it reaches an ambient temperature. This allows the block 630 to couple to the cooled alloy 620. Once the block 630 is coupled to the alloy composition 620, the second arm 137 withdraws from the first chamber 110.

Figure 2 illustrates a back view of chamber assembly 102 used for the automated manufacture of ophthalmic lenses according to various embodiments of the present disclosure. In Figure 2, a block 630 is shown coupled to the first end 43 of the second arm 137 after the second arm 137 has been withdrawn from the second opening 115 of the first chamber 110. The second arm 137 is withdrawn from the second opening 115 to a predetermined distance so the block 630 is positioned above the conveyor belt 170. After a predetermined time period, the chuck 640 (Figure 6) releases the block 630, and the block 630 falls onto the conveyor belt 170. The block 630 may be moved toward the diverter gates 190 and sorting bins 195 as the conveyor belt 170 rotates.

Figure 3 illustrates a portion of the interior of a first chamber 110 according to various embodiments of the present disclosure. Positioned within the interior of first chamber 110 is a nozzle assembly 145 comprising one or more nozzles 150. In some embodiments, the first chamber 110 may contain at least one nozzle 150. In other embodiments, the first chamber 110 may contain two or more nozzles 150, as shown. The two or more nozzles 150 are configured to deposit an agent, such as, but not limited to, water, at a predetermined temperature and pressure, depending on which stage of the deblocking process the lens L is undergoing at each particular stage of the manufacturing process.

When the first arm 120 positions the lens L in the first chamber 110 along horizontal axis H1, and a portion of the second arm 137 is positioned in the first chamber 110 along the same horizontal axis H1, the outer face 642 of the chuck 640 (Figure 6) that is positioned on the second end 27 of the second arm 137 becomes coupled to the outer face 643 of the block 630 that is coupled to the lens L via the alloy 620 and adhesive. Once the chuck 640 is coupled to the block 630, a first nozzle 150 sprays water onto at least a portion of the convex surface L1 of lens L at a temperature and pressure sufficient to melt the alloy 620 that couples the block 630 to the lens L. In one embodiment the nozzle assembly 145 can be used to spray at least a portion of the lens L at a temperature of about between about 60° C and 90° C, more particularly, about 80° C and a pressure of between about 1000 psi and 1300 psi, more particularly, about 1200 psi. While at least one nozzle 150 is used to spray the lens L, the nozzle 150 can remain stationary, while the lens L moves relative to the nozzle 150.

After the agent, such as water, has melted the alloy 620, the block 630 is no longer attached to the lens L, via the alloy and adhesive (not shown). The lens L retains an adhesive material on its convex side L1 where the alloy 620 was coupled to the lens L, via the adhesive (not shown). To remove the adhesive layer, a nozzle 150 sprays and agent, such as water at a predetermined temperature and predetermined pressure sufficient to remove the adhesive composition from the lens L. In these embodiments, the temperature, pressure, or both can be adjusted between spray cycles. In some embodiments, the temperature and pressure can be the same or different for different spray cycles. In other embodiments a first nozzle 150 sprays water at a first temperature and first pressure, and a second nozzle 150 sprays water at a second temperature and second pressure. In these embodiments, neither the temperature nor pressure needs to be adjusted between spray cycles, because each nozzle is used for a separate spray cycle.

Once the adhesive composition has been removed from the lens L, the lens L has completed the deblocking process. The lens L is removed from the first chamber 110 by the first arm 120, and the block 630 is removed from the first chamber 110 by the second arm 137. The lens L is returned to its lens receptacle 180, and the block 630 is sorted according to its size using the sorting system illustrated in Figure 4.

In certain embodiments, the first chamber 110 is situated directly adjacent to and above the second chamber 160 with no physical internal barrier between the two chambers. This configuration allows the water and alloy 620 to proceed directly into the second chamber 160 from the first chamber 110. This configuration also prevents the need for an additional step of transferring the water and alloy 620 from the first chamber 110 to the second chamber 160. In addition, this configuration prevents the water and alloy 620 from collecting at the bottom of the first chamber 110, where it could otherwise collect and rise to the level where it would interfere with the de-blocking process of subsequent lenses. In other embodiments, the first chamber 110 and second chamber 160 have an internal barrier between them. In these embodiments, the used water and alloy 620 must be released from the first chamber 110 into the second chamber 160, either manually or automatically at predetermined intervals.

Figure 4 illustrates a sorting assembly having a plurality of diverter gates secured to the support frame and a plurality of sorting bins secured to the support frame. Also illustrated is a block 630 moving along the conveyor belt 170 and undergoing the sorting process described herein according to various embodiments of the present disclosure. Different sizes of blocks 630 may be used to block a lens L. The blocks 630 are separated by size in order to expedite the blocking process. Positioned proximate to the conveyor belt 170 and attached to the support frame 57 is a plurality of diverter gates 190. The plurality of diverter gates is positioned such that, in the resting state, each gate is substantially parallel to each other gate. The plurality of diverter gates 190 are arranged in a configuration so that the largest size block 630 will be diverted into a sorting bin 195 by the first diverter gate 190, and the smallest size block 630 will not be diverted into a sorting bin 195 until the block 630 reaches the last diverter gate 190 (i.e., the diverter gate furthest away from the chamber assembly 102). This sorting method is accomplished by varying the distance between the diverter gate 190 and the conveyor belt 170. For example, in a series of three diverter gates 190, the first diverter gate 190 may be between about 2 inches and 1.70 inches, preferably about 1.75 inches above the conveyor belt 170, the second diverter gate 190 may be between about 1.70 inches and 1.4 inches, preferably about 1.5 inches above the conveyor belt 170, and the final diverter gate 190 may be between about 1.4 inches and 1.15 inches, preferably about 1.25 inches above the conveyor belt 170.

Any number of diverter gates 190 may be used to effectively sort blocks 630, depending on the number of different sized blocks used at any particular time. For example, Figure 4 depicts three diverter gates 190, but more or fewer may be used. In some embodiments where only one sized block 630 is used in the deblocking process, the sorting system may not comprise any diverter gates 190, with a single sorting bin 195 placed at the end of the conveyor belt so each block 630 drops into the sorting bin 195. In other embodiments where only one sized block 630 is used, the sorting system may comprise one diverter gate 190 diverting each block 630 into a single sorting bin 195.

Figure 5 illustrates the interior of a second chamber 160 of chamber assembly 102 according to various embodiments of the present disclosure. The second chamber 160 comprises a tubular conduit such as a drain pipe 540 having a drain opening 530 at one end of the tubular conduit, and the opening 530 is positioned within a wall of the chamber 160 to be in fluid communication with the interior of chamber 160. A drain knob 550 is connected to an outer surface of the tubular conduit 540. The second chamber 160 is configured to contain an agent, such as, but not limited to, water. The second chamber 160 contains the water and can comprise a water heater (not shown) that is used to heat the water. The second chamber 160 is configured to contain a liquid water 510/alloy 520 mixture. Although a water section 510 and an alloy section 520 are depicted herein as separate liquids, this distinction is for illustration purposes only. Because of the different weights of the alloy 620 and the water 510, the alloy 620 and water naturally separate into two distinct sections.

In certain embodiments, there is no physical boundary between the first chamber 110 and the second chamber 160. In these embodiments, the water and alloy 620 that runs off from the deblocking process are able to feed directly into the second chamber 160. As the water and alloy 620 fall into the second chamber 160, the water and alloy 620 are heated by the second chamber 160 to a temperature high enough to prevent the alloy 620 from solidifying into a solid state. Because the alloy 620 is naturally heavier than water, the alloy 620 sinks below the water to the bottom of the second chamber 160.

Because the alloy section 520 is adjacent to the bottom of the second chamber 160, the alloy 620 may be recovered through the tubular conduit or drain opening 530 in the bottom of the second chamber 160. When the drain opening 530 is in the open position, as indicated by the position of the drain knob 550, the alloy drains through the drain pipe 540 into an alloy receiving tray 560. The alloy receiving tray 560 may be any container suitable to contain an alloy composition 620 known to one of ordinary skill in the art. In certain embodiments, the alloy receiving tray 560 may be divided into individual alloy receiving receptacles 565. In this embodiment, the alloy receiving receptacles 565 provide the advantage of the alloy 620 being reclaimed in consistent, predetermined allotments for ease of reuse when used in the lens blocking process. For example, the alloy receiving receptacles 565 may be in the shape of a cube. In this case, specifically sized cubes of alloy 620 may be reclaimed, yielding a more consistent lens blocking process.

Figure 6 illustrates a blocked lens L according to various embodiments of the present disclosure. The blocked lens L comprises a lens L, an alloy composition 620, and a block 630. The lens is coupled to the block via an adhesive composition and an alloy composition. In certain embodiments, the lens L is the lens described above. The lens L may be made of any suitable composition known to one of skill in the art. For example, the lens L may be made of a polycarbonate composition.

The alloy composition 620 serves as an intermediary between the lens L and the block 630, and is coupled to the lens 610 by an adhesive composition. The alloy composition 620 may be any suitable alloy composition known to one of skill in the art. For example, the alloy composition may be a blocking alloy, such as, but not limited to, alloy compositions containing between about 40% and about 70% bismuth; between about 13% and about 30% lead; between about 13% and about 30% indium; between about 7% and about 10% tin; and between about 5% and 7% cadmium. Other alloy compositions known in the art may be used.

The block 630 is used to hold the lens L in place throughout the grinding and polishing processes. The use of the block 630 allows the lens L to be transferred among the lens receptacle 180 and various machines for grinding, polishing, and finishing without excessive contact to the lens L itself, which reduces the risk of damage to the lens L. The block 630 may be any suitable block known to one of ordinary skill in the art. In certain embodiments, different sized blocks 630 may be used to block different types or sizes of lenses. For example, a larger block 630 may be used to block one type of lens L, while a smaller block 630 may be used to block another type of lens L. In these embodiments, the blocks 630 may be sorted by size after the lens L has been deblocked using the sorting apparatus illustrated in Figure 4.

Figure 6 further depicts a lens chuck 640. The lens chuck 640 is configured to be attached to the second end 87 of third arm 140 and is configured to retrieve the block 630 throughout the deblocking process. The lens chuck 640 may be any suitable chuck known to one of skill in the art, for example a compression sleeve chuck as described in U.S. Patent No. 5,567,198 or an air pressurized chuck as described in U.S. Patent No. 5,746,436.

Figure 6 further depicts a suction cup 650. In various embodiments, the suction cup 650 is coupled to the second end 127 of the first arm 120 described above. In these embodiments, the suction cup 650 is used to secure the lens L so it may be removed from the lens receptacle 180 and undergo the deblocking process. In certain embodiments, the entire automated system 100, and in particular suction cup 650, is driven by a mechanical timer via a computer software program, for example (i.e., PLC). For example, the suction cup 650 may begin to adhere to a lens L at a specific interval, maintain suction with the lens L through the deblocking process, and release the lens L at a specific interval. In these embodiments, when the suction cup 650 releases the suction with the lens L, the lens L is transferred to the third arm 140 for a one-hundred-eighty degrees rotation and placed in the lens receptacle 180.

The blocked lens L is the resulting product of the blocking process, in which the lens L is attached to the block 630 via the alloy composition 620. A thin adhesive strip (not pictured) is applied to the convex surface of the lens L to prevent damage to the lens L. In some embodiments, after the adhesive is applied, the block 630 is fused to the alloy composition 620 while the alloy composition 620 is hot, which results in a coupling after the alloy composition 620 cools. The alloy composition 620 is then coupled to the lens L via the adhesive. In other embodiments, the block 630 is fused to the alloy composition 620 after the alloy composition 620 has been coupled to the lens L via the adhesive.

Figure 7 illustrates a method 700 for deblocking a lens according to various embodiments of the present disclosure. Although described herein as a series of sequential steps, some steps may not occur, or may occur in parallel, or may occur in a different order. Figure 7 is for illustrative purposes only. All steps of the manufacturing process described herein are automated according to the computer PLC program described herein.

In step 710, the first arm 120 retrieves the blocked lens L from the lens receptacle 180. The first arm 120 then rotates from a vertical axis V1 to a horizontal axis H1 such that it is aligned with the first opening 105 of the chamber assembly 102, approximately ninety degrees relative to the vertical axis V1. Once the blocked lens L is diametrically aligned with the first opening 105, the first arm 120 inserts the blocked lens L into the first chamber 110 through the first opening 105. On the opposite side of the chamber assembly 102 from the first opening 105, the second arm 137 rotates from a vertical axis V2 to the horizontal axis H1, aligns with the second opening 115, and the second arm 137 is advanced into the first chamber 110 through the second opening 115. Once the second arm 137 has advanced into the chamber assembly 102, the outer face 642 of the chuck 640 attaches to the first face 632 of the block 630.

In step 720, the first of at least one nozzle 150 sprays an agent, such as, but not limited to, water, onto the blocked lens L at a temperature and a pressure sufficient to melt the alloy composition 620 of the blocked lens L. Once the alloy composition 620 has melted, the blocked lens L is no longer a blocked lens L, but a deblocked lens attached to the first arm 120 by a suction cup 650. The second arm 137 remains attached to the block 630 via the lens chuck 640.

In step 730, the alloy composition 620 removed by the at least one nozzle 150 is reclaimed in the second chamber 160 of the chamber assembly 102. In certain embodiments, there is no physical boundary within the interior of the chamber assembly 102 between the first chamber 110 and the second chamber 160. Thus, the water from the at least one nozzle 150 and the alloy composition 620 can both fall directly into the second chamber 160. Because the alloy composition 620 is heavier than the water, the alloy composition 620 and water naturally separate into two distinct liquids. Because the alloy section 520 is adjacent to the bottom of the second chamber 160, the alloy composition 620 can be readily recovered through a drain conduit or opening 530 in the bottom of the second chamber. When the drain opening 530 is in the open position, as indicated by the position of the drain knob 550, the alloy drains through the drain conduit or pipe 540 into an alloy receiving tray 560. The alloy receiving tray 560 may be any container suitable to contain an alloy composition 620 known to one of ordinary skill in the art.

In step 740, the second arm 137 removes the block 630 from the first chamber 110. Once the block 630 has been removed from the first chamber 110, the second arm 137 releases the block 630 onto the conveyor belt 170. The block 630 travels along the conveyor belt 170 until it is sorted by at least one diverter gate 190 into a sorting bin 195.

In step 750, a second nozzle 150 sprays an agent, such as water, onto the lens L having an adhesive, at a temperature and pressure sufficient to remove the adhesive layer from the lens L. Once the adhesive layer is sufficiently removed from the lens, the lens has been completely deblocked. The water from the second nozzle 150 falls into the second chamber 160, and helps to reclaim the alloy, as described in step 730.

In step 760, the first arm 120 removes the lens from the first chamber 110. Once the lens has been removed from the chamber assembly 102, the first arm 120 rotates approximately ninety degrees from the horizontal axis H1 until it has returned to its original position along the vertical axis V1, and the lens is held by the suction cup 650 with its concave side L1 facing the lens receptacle 180.

In step 770, the first arm 120 transfers the lens to the third arm 140. In certain embodiments, the distance between the second end 127 of the first arm 120 and the suction cup 142 on the third arm 140 at the time the third arm 120 releases the lens L is less than three inches, preferably less than two inches, and more preferably less than one inch. In other embodiments, the first arm 120 lowers the lens L a predetermined distance, allowing the lens L to be transferred directly to the third arm 140, with no distance between the first arm 120 and the third arm 140. This embodiment helps to ensure that the lens will not be damaged through transfer. The third arm 140 receives the lens in its original position, with the concave side facing up and away from the receptacle. In various embodiments, the distance between the second end 127 of the first arm 120 and the suction cup 142 on the third arm 140 at the time the third arm 140 releases the deblocked lens L is less than three inches. In other embodiments the distance between the second end 127 of the first arm 120 and the suction cup 142 on the third arm 140 at the time the third arm 120 releases the deblocked lens L is less than two inches. In other embodiments, the distance between the second end 127 of the first arm 120 and the suction cup 142 on the third arm 140 at the time the third arm 140 releases the deblocked lens L is less than one inch. In other embodiments, the first arm 120, attached to the lens L, is used to position the deblocked lens L a predetermined distance, allowing the lens L to be transferred directly to the third arm 140, with no space between the first arm 120 and the third arm 140. In this embodiment, the likelihood that the deblocked lens L is damaged through the transfer from the first arm 120 to the suction cup 142 of the third arm 140 is minimized. The third arm 140 receives the deblocked lens L in its original position, with the concave side facing away from the interior surface of receptacle 180.

Once the third arm 140 has been positioned to maintain the deblocked lens L in place, the first arm 120 retracts to its first or original position along vertical axis V1. The retraction of the first arm 120 allows sufficient space between the first arm 120 and the third arm 140 for the third arm 140 to rotate one-hundred-eighty degrees, resulting in the deblocked lens L having an orientation with its convex side facing away from the interior surface of the receptacle 180. Once the deblocked lens L is oriented in this way, the third arm 140 releases the deblocked lens L into the lens receptacle 180. The rotation of the deblocked lens L before it is released into the lens receptacle 180 serves to minimize the surface area that contacts the lens receptacle 180, which minimizes the risk of damage to the deblocked lens L.

Once the lens L has been deblocked, the block 630, which is positioned to be on top of the conveyor belt 170, is advanced by the moving conveyor belt 170 to the one or more diverter gates 190 and the sorting bins 195 (Figures 1C and 4), where the block 630 is sorted into an appropriate sorting bin 195 according to its size. Once the third arm 140 has retrieved the lens L, the first arm 120 retracts to its original position along the vertical axis V1.

In step 780, the third arm rotates approximately one-hundred-eighty degrees to flip the lens L. The retraction of the first arm 120 functions to allow a sufficient space between the first arm 120 and the third arm 140 for the third arm 140 to sufficiently rotate, resulting in the lens L being positioned in an orientation with its convex side facing up and away from the receptacle. Rotating the lens L before it is released into the lens receptacle 180 serves to minimize the surface area of the lens L that contacts the lens receptacle 180, which minimizes the risk of damage to the lens L.

In step 790, the third arm 140 releases the lens L into the lens receptacle 180. Once the lens has been replaced in the lens receptacle 180, the lens receptacle 180 may be transferred to another station by a conveyor belt or an operator.

The particular examples disclosed above are illustrative only, as the present invention may be modified and practiced in different but equivalent manners apparent to those skilled in the art having the benefit of the teachings herein. It is, therefore, evident that the particular illustrative examples disclosed above may be altered or modified and all such variations are considered within the scope of the present invention.

The various elements or steps according to the disclosed elements or steps can be combined advantageously or practiced together in various combinations or sub-combinations of elements or sequences of steps to increase the efficiency and benefits that can be obtained from the invention.

It will be appreciated that one or more of the above embodiments may be combined with one or more of the other embodiments, unless explicitly stated otherwise. The invention illustratively disclosed herein suitably may be practiced in the absence of any element or step that is not specifically disclosed or claimed. Furthermore, no limitations are intended to the details of construction, composition, design, or steps herein shown, other than as described in the claims.

## Claims

1. A system for the automated manufacture of an ophthalmic lens, the system comprising:
a first arm having a first end and a second end and positioned along a first vertical axis, wherein the first arm is pivotable from the first vertical axis to a first horizontal axis, and wherein the second end of the first arm is configured to receive a lens coupled to a block using an alloy composition and an adhesive composition;
a second arm having a first end and a second end, wherein the second arm is configured to extend along the first horizontal axis opposite the first arm, and wherein the second end of the second arm is configured to be operably coupled to the block; and
a chamber assembly comprising:
a first chamber configured for receiving at least a portion of the first arm and at least a portion of the second arm, and wherein the first chamber comprises a nozzle assembly configured to deposit at least one agent onto at least a portion of the lens; and
a second chamber adjacent the first chamber, wherein the second chamber comprises a third arm extending along a second horizontal axis, and wherein the second chamber is configured to receive the lens coupled to a block from the first arm.

2. The system of claim 1, wherein the second arm is pivotable from a second vertical axis to the first horizontal axis.

3. The system of claim 1, wherein the lens is coupled to the block via an adhesive composition and an alloy composition.

4. The system of claim 3, wherein the nozzle assembly comprises at least one nozzle configured to deposit the agent by spraying the agent onto at least a portion of the lens at a first temperature and first pressure sufficient to melt the alloy composition, and wherein the agent is water.

5. The system of claim 4, wherein the nozzle assembly comprises a second nozzle configured to deposit the agent by spraying the agent onto at least a portion of the lens at a second temperature and a second pressure sufficient to remove the adhesive from at least a portion of the lens.

6. The system of claim 5, wherein the second pressure is equal to, less than, or greater than the first pressure.

7. The system of claim 1, wherein the system further comprises a conveyor belt assembly, the conveyor belt assembly comprising a conveyor belt moveably positioned on a support frame and at least one lens receptacle removably positioned on the conveyor belt.

8. The system of claim 1, wherein the third arm comprises a first end and a second end, wherein the second end comprises a suction cup capable of retaining at least a portion of the lens.

9. The system of claim 8, wherein the third arm is a pivotable rotating arm, configured to receive the lens from the first arm, rotate the lens one hundred and eighty degrees, and place the lens in the receptacle such that the concave side of the lens is in contact with the receptacle.

10. The system of claim 7, further comprising a sorting assembly having a plurality of diverter gates secured to the support frame and a plurality of sorting bins secured to the support frame.

11. The system of claim 10, wherein the plurality of diverter gates are positioned parallel relative to each other to allow a first block to be diverted from the conveyor belt before a second block is diverted from the conveyor belt, wherein the first block is larger than the second block.

12. A method for the automated manufacture of ophthalmic lenses, the method comprising:
providing a chamber assembly comprising a first chamber and a second chamber; and at least one lens coupled to at least one block, wherein the at least one block is coupled to the at least one lens via an alloy composition and an adhesive com position;
melting the alloy composition to remove the at least one block from the at least one lens within the chamber assembly;
removing the adhesive composition from the at least one lens within the chamber assembly;
reclaiming the alloy composition from the removed at least one block within the chamber assembly;
removing the at least one block; and
sorting the at least one removed block.

13. The method of claim 12, wherein the method further comprises releasing the block from the lens as the alloy composition is melted.

14. The method of claim 12, wherein the method further comprises draining the alloy composition from the second chamber while retaining water within the second chamber.

15. The method of claim 12, wherein the method further comprises sorting the removed block using a plurality of diverter gates.
